# EUROPÄISCHE PATENTSCHRIFT

(11) **EP 2 738 409 B1**
(45) Veröffentlichungstag und Bekanntmachung des Hinweises auf die Patenterteilung: **03.04.2019**
(21) Anmeldenummer: 13195226.9
(22) Anmeldetag: 02.12.2013
(51) Int. Cl.: F16D 7/00, F16D 7/08, F16D 43/206

(54) **Radnabe mit einstellbarem Drehmoment**
Wheel hub with adjustable torque
Moyeu de roue doté d'un couple réglable

(30) Priorität: 03.12.2012 DE 102012222075
(43) Veröffentlichungstag der Anmeldung: 04.06.2014
(73) Patentinhaber: Waggonbau Graaff GmbH, 31008 Elze (DE)
(72) Erfinder: Helbig, Nico, 30169 Hannover (DE); Pana, Constantin, 31008 Elze (DE)
(74) Vertreter: Seewald, Jürgen

(56) Entgegenhaltungen:
- EP-A2- 1 462 670
- US-A- 3 441 115
- US-A- 4 619 437
- US-A- 5 545 109

## Beschreibung

Die Erfindung betrifft eine Vorrichtung entsprechend den Merkmalen des Oberbegriffes des ersten Patentanspruches.

Die Erfindung ist überall dort einsetzbar, wo mittels eines Antriebes eine Spindel bewegt wird, die bei einem vorgegebenen Drehmoment ausgekoppelt werden soll. Als Antrieb ist ein Handrad vorzusehen, so dass der Bediener des Handrades bei auskoppeln informiert ist, dass das Bedienelement am Ende der Spindel eine Endstellung erreicht hat. Vorstellbar ist statt eines Handrades aber auch ein anderer geeigneter Antrieb wie eine Kurbel.

Das Bedienelement kann beispielsweise bei einem Handrad ein Ventil, eine Bremse oder eine Druckpresse sein.

DE 1 816 962 U beschreibt ein auf einer Welle befestigtes Handrad, wobei ein Bediengriff am Handrad angeordnet ist, der gegenüber dem Handrad frei verdrehbar ist und über eine Reibungskupplung in beliebiger Stellung koppelbar ist. Ein vorgegebenes Drehmoment ist mit diesem Handrad allerdings nicht einstellbar.

DE 37 42 658 A1 beschreibt eine Sicherheitskupplung, deren Drehmomentübertragung durch die radiale Spannung einer unter Hochdruck stehenden Spannhülse zustande kommt. Diese Sicherheitskupplung weist ein Auslöseventil auf. Bei einer überlastungsbedingten Verdrehung der Welle gegenüber der Nabe wird das Auslöseventil geöffnet, so dass durch Abbau des Druckes in der Spannhülse die Drehmomentübertragung unterbrochen wird. Der Stößel des Auslöseventils wird nach der Verdrehung in das Auslöseventil hineingezogen, so dass die Sicherheitskupplung ohne eintretende Zerstörung oder Verschleiß wieder durch Druckaufbau in Betrieb gesetzt werden kann.

DE 922 687 B beschreibt ein Ventil, insbesondere für Feuerlöschgeräte mit einem Totgang in der Betätigung, wobei ein Handrad mit einer federnden Raste vorgesehen ist, die bei Überwindung des Totganges eine besondere zusätzliche Kraft erfordert.

Die Vorrichtung ist zwar zum Öffnen oder Schließen eines Ventils geeignet, wobei ein Drehmoment vorgegeben werden kann, dieses ist allerdings nicht exakt einstell- und veränderbar.

US 4,619,437 beschreibt eine Lösung für das Begrenzen eines Drehmomentes an einem Handrad. Dabei sind zwei Kugeln und vier Druckfedern eingesetzt, wobei zwei Federn gegen zwei Kugeln wirken und diese gegen den Oberteil des Gehäuses drücken und zwei Federn keilförmige Rastierungen in ein Gegengehäuse drücken.

Das exakte Einstellen eines Drehmomentes an einem Handrad ist mit dieser Vorrichtung auf einfache Weise nicht möglich.

Nachteilig an diesem Stand der Technik ist, dass die mit einem Antrieb wie einem Handrad auf eine Betätigung aufgebrachte Kraft sich gar nicht oder undefiniert dosieren lässt, so dass es zu einer starken Belastung der Betätigung oder gar zu deren Beschädigung oder zur Beschädigung des Bedienelementes führen kann, welches betätigt wird.

Weiterhin hat eine zu fest geschlossene Betätigung den Nachteil, dass diese sich nicht von jedem Bedienelement oder Bediener problemlos öffnen lässt.

Selbst wenn die Spindel durch eine andere Vorrichtung als durch ein Handrad betätigt wird, sind diese Nachteile zutreffend.

EP 1 462 670 A2 beschreibt eine Vorrichtung mit einstellbarem Drehmoment geeignet für eine Betätigung über eine Spindel, gemäß dem Oberbegriff des Anspruchs 1. Auch diese Vorrichtung überwindet noch nicht alle obenerwähnten Nachteile.

Es ist deshalb Aufgabe der Erfindung, eine Vorrichtung zu entwickeln, die es ermöglicht, eine Betätigung mittels Spindel so zu schließen oder zu öffnen, dass eine vorgegebene Kraft durch ein definiertes eingestelltes Drehmoment auf diese Betätigung aufgebracht wird, und wobei es, falls erforderlich und für die Betätigung zulässig, möglich ist mit der Vorrichtung weiterhin ein größeres als das eingestellte Drehmoment zu übertragen.

Diese Aufgabe wird durch eine Vorrichtung nach den Merkmalen des ersten Patentanspruches gelöst.

Unteransprüche geben vorteilhafte Ausgestaltungen der Erfindung wieder.

Die erfindungsgemäße Lösung sieht eine Vorrichtung mit einem einstellbaren Drehmoment zum Drehen einer Spindel für eine Betätigung vor, wobei die Betätigung ein Ventil, eine Bremse, eine Druckpresse oder eine andere Betätigung darstellen kann, die durch einen Spindelantrieb geschlossen oder geöffnet wird, d. h., dass die Spindel durch den Antrieb über eine Spindelmutter in zwei Richtungen bewegt wird und das Bedienelement dadurch auf oder zu gemacht wird bzw. ein oder ausgeschaltet wird.

Die erfindungsgemäße Vorrichtung besteht aus einer Nabe, deren einer Teil angetrieben wird und deren anderer Teil die Drehbewegung abtreibt. Im Folgenden wird der angetriebene Teil der Nabe als Nabenantrieb und der die Bewegung abtreibende Teil der Nabe als Nabenabtrieb bezeichnet.

Als Spindelantrieb kann ein Handrad vorgesehen werden. Denkbar ist aber auch ein anderer geeigneter Antrieb wie eine Kurbel.

Die erfindungsgemäße Vorrichtung sieht vor, dass zwischen einem Sicherungsmittel und einer Stellmutter auf einen Nabenabtrieb eine Feder gegen einen Käfig mit Kugeln wirkt, wobei die Andruckkraft der Feder mittels der Stellmutter einstellbar ist.

Vorteilhaft ist es, wenn das Sicherungsmittel einen Sicherungsring darstellt.

Weiterhin ist es vorteilhaft, wenn die Feder eine Tellerfeder darstellt.

Die erfindungsgemäße Vorrichtung weist weiterhin einen Nabenantrieb am Nabenabtrieb auf.

Weiterhin sind Kugeln zwischen Nabenantrieb und Nabenabtrieb im Käfig angeordnet, wobei mindestens drei Kugeln im Käfig gleichmäßig verteilt angeordnet sind. Denkbar ist aber auch eine höhere Anzahl von Kugeln, wenn das für die zu lösende Aufgabe von Vorteil ist.

Die erfindungsgemäße Vorrichtung weist weiterhin am Nabenantrieb in regelmäßigen Abständen Nuten und gegen den Nabenabtrieb wirkende Anschläge auf. Weiterhin sind am Nabenabtrieb Mulden für die Kugeln und Anschläge angeordnet.

Vorteilhaft ist es, die Nuten am Nabenantrieb keilförmig auszubilden, wobei es weiterhin vorteilhaft ist, am Nabenantrieb drei Nuten anzuordnen. Denkbar ist aber auch eine höhere Anzahl von Nuten, wenn das die Auslegung der Vorrichtung erfordert.

Weiterhin ist es vorteilhaft, am Nabenantrieb mindestens drei Anschläge anzuordnen.

Im Hinblick auf den Nabenabtrieb ist es dementsprechend vorteilhaft, mindestens drei Mulden für die Kugeln und jeweils Anschläge auf jeder Seite der Mulden anzuordnen.

Die Vorrichtung kann, sofern das eine vorteilhafte Konstruktion erfordert, selbstverständlich auch mit mehr als drei Kugeln, keilförmigen Nuten, Anschlägen am Nabenantrieb und Anschlägen am Nabenabtrieb sowie mit mehr als drei Mulden ausgeführt sein.

Die Anzahl der Kugeln, keilförmigen Nuten, Anschläge zum Nabenantrieb, Mulden und Anschläge beiderseits der Mulden stimmt jeweils überein.

Die Länge der Mulde, in der sich die Kugel befindet, ist so zu bemessen, dass bei einer Stellung, in der sich die Kugel in der keilförmigen Nut befindet und die Anschläge in Wechselwirkung treten, die Kugel noch nicht an einer begrenzenden Wandung anliegt.

Die begrenzende Wandung ist die Fläche, die im Wesentlichen senkrecht zur Lauffläche der Mulde angeordnet ist.

Vorteilhaft ist es, die Höhe der Mulde für die Kugel am Nabenabtrieb so zu bemessen, dass sie nicht ganz einem Radius der Kugel entspricht. Denkbar ist es beispielsweise, wenn die Höhe der Mulde für die Kugel am Nabenabtrieb etwa 90-99%, vorzugsweise 95-98%, eines Radius der Kugel entspricht. Weiterhin ist es vorteilhaft, wenn das Ende einer jeden Mulde einen Radius aufweist, der in etwa dem Kugelradius entspricht.

Weiterhin ist es vorteilhaft, am Nabenantrieb einen Anzeiger anzuordnen, der anzeigt, ob die erfindungsgemäße Vorrichtung sich im Leerlauf befindet, d. h. ob die Betätigung sich in geschlossenem Zustand befindet oder ob die Betätigung geöffnet bzw. ein- oder ausgeschaltet ist.

Die erfindungsgemäße Vorrichtung funktioniert auf folgende Weise:
Nabenantrieb und Nabenabtrieb, unter denen der Käfig mit Kugeln angeordnet ist, werden oben durch das Sicherungsmittel, den Sicherungsring, begrenzt und unten durch die Mutter, die gegen eine Feder, insbesondere eine Tellerfeder, wirkt.
Sicherungsmittel und Mutter sind am Nabenabtrieb angeordnet. Durch die Mutter ist die Federkraft so einstellbar, dass die Vorrichtung bei einem vorgegebenen Drehmoment auslöst oder auskoppelt. Nach Einstellen dieses Drehmomentes kann durch Betätigen des Antriebs, beispielsweise des Handrades, die Betätigung mittels Spindel gedreht werden, wobei die Kugeln zwischen der keilförmigen Nut des Nabenantriebes und in der Mulde des Nabenabtriebes die Verbindung zwischen Nabenantrieb und Nabenabtrieb darstellen. Sobald die Betätigung über die Spindel geschlossen oder angelegt ist und ein bestimmtes Drehmoment erreicht wird, wirken die Kugeln gegen die keilförmigen Nuten und drücken den Käfig gegen die Kraft der Feder so lange nach unten, bis die Kugeln sich nicht mehr in der Nut befinden, so dass der Nabenantrieb gegenüber dem Nabenabtrieb verdrehbar ist.

An diesem Punkt lassen sich Nabenantrieb und Nabenabtrieb gegeneinander frei bewegen, was dadurch möglich wird, dass die Kugeln zwischen dem Käfig und der Ebene am Nabenantrieb rollen. Das Drehmoment wird nicht mehr auf den Nabenabtrieb übertragen, die Vorrichtung befindet sich im Leerlauf, so dass der Bediener an einem Handrad oder einem Bedienmechanismus feststellt, dass kein Widerstand mehr vorhanden und die Vorrichtung ausgekoppelt ist. Nabenantrieb und Nabenabtrieb sind in dieser Stellung in einem vorgegebenen Winkel zueinander frei bewegbar, solange bis die Anschläge von Nabenantrieb und Nabenabtrieb in Kontakt kommen, so dass dem Bediener oder dem Bedienmechanismus angezeigt wird, dass die Endstellung zwischen Nabenantrieb und Nabenabtrieb erreicht ist. In dieser Endstellung sollte ein weiteres Bewegen des Antriebes nicht stattfinden, da das zur Beschädigung der Betätigung führen kann. Falls doch erforderlich und für die Betätigung zulässig ist es in dieser Endstellung jedoch möglich mit der beschriebenen Vorrichtung weiterhin ein größeres als das eingestellte Drehmoment zu übertragen.

In dieser Stellung befindet sich auch der Anzeiger, der auf den Nabenabtrieb angeschraubt sein kann, in einer Position, in der angezeigt wird, dass ein weiteres Betätigen des Antriebes nicht erfolgen sollte.

Zum Öffnen der Betätigung ist die Spindel in die entgegengesetzte Richtung zu drehen. Dazu wird der Antrieb am Nabenantrieb in die entgegengesetzte Richtung bewegt. Der Nabenantrieb bewegt sich frei zum Nabenabtrieb. Die Kugeln rollen auf der Ebene des Nabenantriebes bis sie durch die Kraft der Feder wieder in die Nuten des Nabenabtriebes eintauchen. Der Käfig bewegt sich dann wird in Richtung des Nabenantriebes. Ein Drehmoment wird beim Öffnen nicht durch die Kugeln übertragen, sondern erfolgt erst dann wenn die Anschläge am Nabenantrieb und am Nabenabtrieb gegeneinander wirken. Dabei wirken die Kugeln in der Nut nicht gegen die Wand der Mulden im Nabenabtrieb. Der Antrieb wirkt so lange in die vorgegebene Richtung, bis die Betätigung ihre vorgegebene Stellung erreicht hat, also geöffnet ist. Danach kann ein erneutes Schließen dadurch beginnen, dass die Drehrichtung gewechselt wird.

Im Inneren der Spindel kann eine Nut angeordnet sein.

Die erfindungsgemäße Lösung hat den Vorteil, dass mittels einer Spindel eine Kraft dosiert auf eine Betätigung aufgebracht werden kann, so dass es nicht möglich ist, eine zu hohe Kraft oder ein zu hohes Moment auf eine Betätigung oder das betätigte Aggregat auszuüben, bevor sich die Vorrichtung in Endstellung befindet. Das hat den Vorteil, dass keine Beschädigungen auftreten können und dass das Öffnen mittels Spindel mit einer vorgegebenen Kraft erfolgen kann.

Im Folgenden wird die Erfindung an einem Beispiel und sechs Figuren näher erläutert. Die Figuren zeigen:
- Figur 1:: Längsschnitt durch die erfindungsgemäße Vorrichtung mit einem Ventilteller als Betätigung.
- Figur 2:: Erfindungsgemäße Vorrichtung beim Schließen einer Betätigung in perspektivischer Darstellung.
- Figur 3:: Erfindungsgemäße Vorrichtung beim Schließen einer Betätigung in perspektivischer Darstellung, nachdem das vorgegebene Drehmoment erreicht wurde.
- Figur 4:: Erfindungsgemäße Vorrichtung beim Schließen einer Betätigung in perspektivischer Darstellung, nachdem das vorgegebene Drehmoment erreicht wurde und nachdem der Anschlag erreicht wurde.
- Figur 5:: Erfindungsgemäße Vorrichtung beim Öffnen einer Betätigung in perspektivischer Darstellung.
- Figur 6:: Darstellung von Figur 5 in anderer perspektivischer Darstellung.

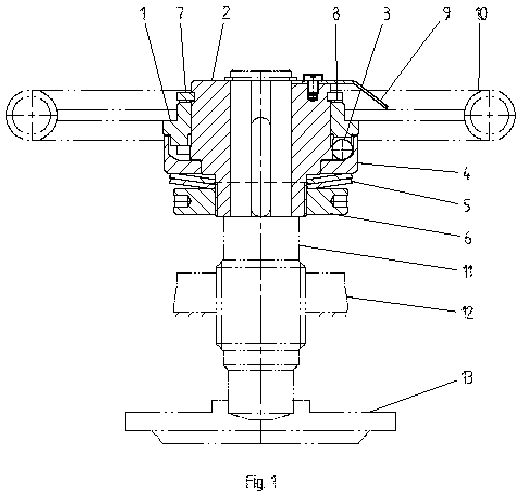

Die *Figur 1* zeigt einen Längsschnitt durch die erfindungsgemäße Vorrichtung, mit der ein Ventilteller 13 über eine Spindel 11 betätigt wird, die sich in der fest angeordneten Spindelmutter 12 dreht und auf diese Weise den Ventilteller 13 nach oben oder nach unten bewegt. Die Drehbewegung der Spindel 11 wird mit dem Handrad 10 erzeugt, welches mit dem Nabenantrieb 1 fest verbunden ist. Über dem Nabenantrieb 1 ist ein Sicherungsring 7 und eine Druckscheibe 8 am Nabenabtrieb 2 angeordnet, gegen die die Feder 5 wirkt, die sich an der Mutter 6 abstützt und den Käfig 4 mit den Kugeln 3 gegen den Nabenantrieb 1 und den Nabenabtrieb 2 drückt. An der Mutter 6, die am Nabenabtrieb 2 befestigt ist, ist das Drehmoment durch die Feder 5 einstellbar, bei der die Vorrichtung auslösen soll. Am Nabenabtrieb 2 ist oben ein Anzeiger 9 mittels Schrauben befestigt.

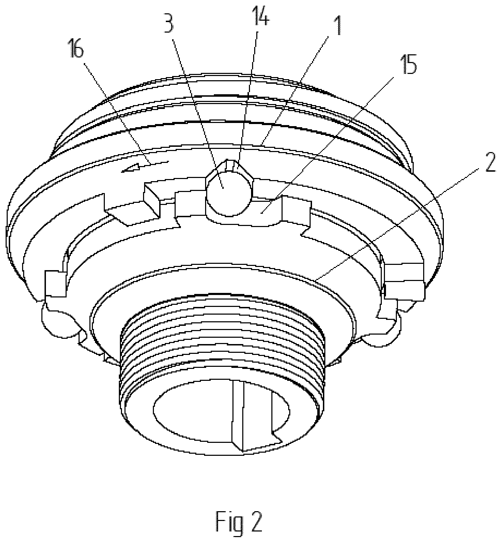

Wie Nabenantrieb 1 und Nabenabtrieb 2 beim Öffnen und Schließen der Vorrichtung zusammenwirken, wird anhand der *Figuren 2 bis* 6 erläutert.

Die Figuren 2 bis Figur 6 sind jeweils ohne Käfig, Feder und Mutter dargestellt.

Die *Figur 2* zeigt den Nabenantrieb 1 in Drehrichtung 16 schließend. Im Nabenantrieb 1 sind im vorliegenden Ausführungsbeispiel drei keilförmige Nuten 14 im gleichen Abstand zueinander angeordnet, in denen sich drei Kugeln 3 befinden, die im Nabenabtrieb 2 in einer Mulde 15 Platz finden, gegen deren Wandung wirken und den Nabenabtrieb 2 mitnehmen, so dass sich Nabenantrieb 1 und Nabenabtrieb 2 gleichzeitig drehen, so dass die Spindel 11 durch die Spindelmutter 12 den Ventilteller 13 nach unten bewegen, bis dieser seine Endstellung erreicht hat. Sobald diese Endstellung des Ventiltellers 13 erreicht ist und der Nabenantrieb 1 weiter gedreht wird, werden die Kugeln 3 aus den keilförmigen Nuten 14 gegen die Kraft der Feder 5 gedrückt, so dass sich der Käfig 4 gegen die Federkraft 5 nach unten bewegt und die Kugeln 3 die Nuten 14 verlassen und auf den Ebenen 17 des Nabenantriebes 1 mit geringem Widerstand abrollen.

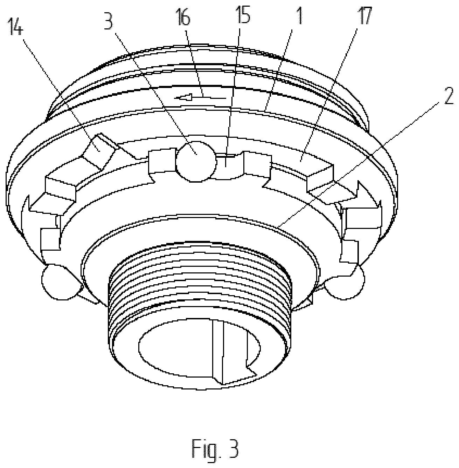

Diese Situation ist in *Figur 3* gezeigt, wobei die Kugeln 3 in der Mulde 15 abrollen und der Bediener am Handrad feststellt, dass kein nennenswerter Widerstand mehr vorhanden ist. Die Kugeln 3 bewegen sich zwischen der Ebene 17 am Nabenantrieb 1 und dem Käfig 4 soweit, bis die Anschläge 18, 19 von Nabenantrieb 1 und Nabenabtrieb 2 aufeinander treffen. Nabenantrieb 1 und Nabenabtrieb 2 werden dabei gegeneinander verdreht, im vorliegenden Fall in etwa um 45 Grad. Ein weiteres Betätigen des Handrades 10 über diesen Punkt hinaus sollte vermieden werden, um Beschädigungen zu vermeiden.

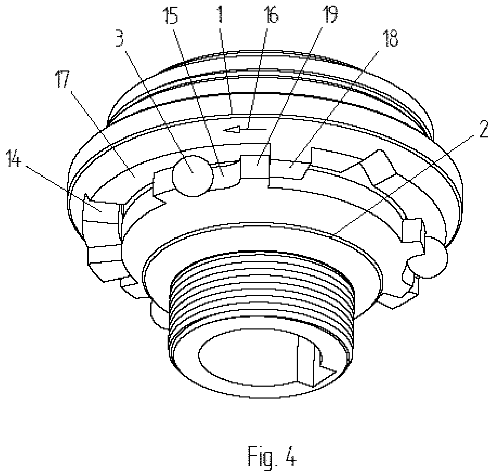

Die Stellung von Nabenantrieb 1 und Nabenabtrieb 2, in der die Anschläge 18, 19 ihre Endstellung erreicht haben, ist in *Figur 4* dargestellt.

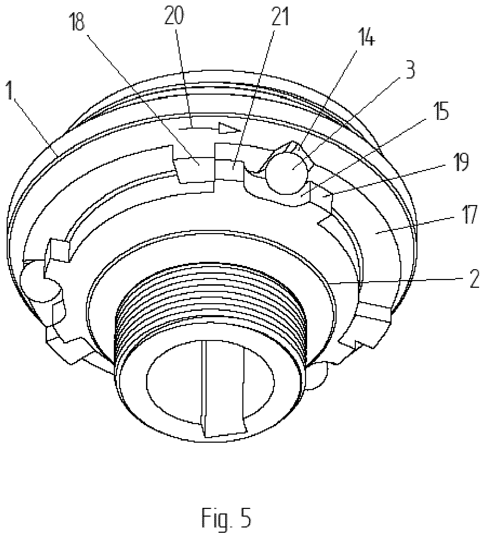

Danach kann das Handrad 10 zum Öffnen des Ventiltellers 13 wieder in entgegengesetzter Richtung gedreht werden, wobei nach einer Leerlaufstrecke die Anschläge 18, 21, zwischen Nabenantrieb 1 und Nabenabtrieb 2 in Wechselwirkung treten, wobei nach einem Verdrehen von Nabenantrieb 1 und Nabenabtrieb 2 gegeneinander die Kugeln 3 durch die Kraft der Feder 5 wieder in die Nut 14 gedrückt werden, wie das die *Figur 5* zeigt.

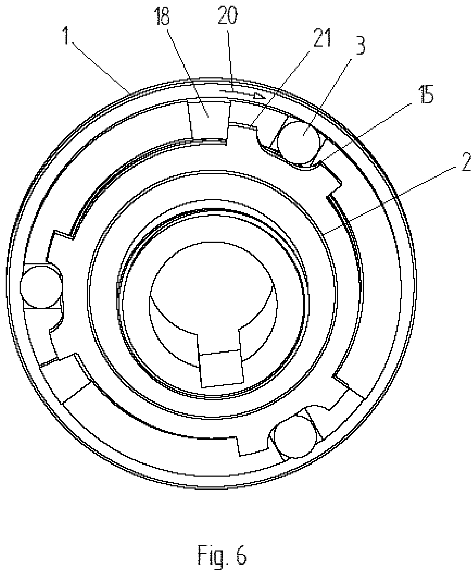

In dieser Stellung wirken die Kugeln 3 nicht gegen die Wandung der Mulde 15 im Nabenabtrieb 2, wie das die *Figur 6* zeigt, was voraussetzt, dass Mulde 15 in ihrer Länge so bemessen ist, dass die Kugeln 3 nicht an der abschließenden Wandung der Mulde 15 anliegen, bevor die Anschläge 18, 21, in Wechselwirkung treten.

### Liste der verwendeten Bezugszeichen

- 1: Nabenantrieb
- 2: Nabenabtrieb
- 3: Kugel
- 4: Käfig
- 5: Feder (Tellerfeder)
- 6: Mutter
- 7: Sicherungsmittel/Sicherungsring
- 8: Scheibe (Druckscheibe)
- 9: Anzeiger
- 10: Handrad
- 11: Spindel
- 12: Spindelmutter
- 13: Ventilteller
- 14: Nut im Nabenantrieb 1
- 15: Mulde in Nabenabtrieb 2
- 16: Drehrichtung, Schließen
- 17: Ebene im Nabenantrieb 1
- 18: Anschlag auf dem Nabenantrieb 1
- 19: Anschlag auf dem Nabenabtrieb 2 für das Schließen
- 20: Drehrichtung, Öffnen
- 21: Anschlag auf den Nabenantrieb 2 für das Öffnen

## Patentansprüche

1. Vorrichtung mit einstellbarem Drehmoment für eine Betätigung über eine Spindel (11), wobei die Spindel (11) durch den Antrieb über eine Spindelmutter (12) in zwei Richtungen bewegt wird und die Vorrichtung nach Erreichen des eingestellten Drehmomentes auskoppelt, aufweisend:
- ein Sicherungsmittel (7) an einem Nabenabtrieb (2), an dem eine einstellbare Mutter (6) angeordnet ist, die gegen eine Feder (5) an einem Käfig (4) wirkt,
- mindestens drei Kugeln (3) im Käfig (4) zwischen einem Nabenantrieb (1) und dem Nabenabtrieb (2) wobei die Vorrichtung **gekennzeichnet ist durch**:
- mindestens drei am Nabenantrieb (1) in Abständen angeordnete Nuten (14) und Anschläge (18) und
- mindestens drei am Nabenabtrieb (2) in Abständen angeordnete Mulden (15) für die mindestens drei Kugeln (3) und Anschläge (19, 21) auf jeder Seite der Mulden (15) für die Anschläge (18) am Nabenantrieb (1).

2. Vorrichtung nach Anspruch 1, **dadurch gekennzeichnet, dass** am Nabenantrieb (1) ein Handrad (10) angeordnet ist.

3. Vorrichtung nach einem der Ansprüche 1 und 2, **dadurch gekennzeichnet, dass** die Feder (5) eine Tellerfeder darstellt.

4. Vorrichtung nach einem der Ansprüche 1 bis 3, **dadurch gekennzeichnet, dass** die Höhe der Mulde (15) für die Kugel (3) am Nabenabtrieb (2) geringer ist, als der Radius der Kugel (3) und die Enden der Mulde (15) einen Radius aufweisen, der dem Kugelradius entspricht.

5. Vorrichtung nach einem der Ansprüche 1 bis 4, **dadurch gekennzeichnet, dass** das Sicherungsmittel (7) einen Sicherungsring darstellt.

6. Vorrichtung nach einem der Ansprüche 1 bis 5, **dadurch gekennzeichnet, dass** auf dem Nabenantrieb (1) ein Anzeiger (9) angeordnet ist.

7. Vorrichtung nach einem der Ansprüche 1 bis 6, **dadurch gekennzeichnet, dass** die Betätigung einen Ventilteller (13), eine Bremse oder Druckplatte darstellt.

## Claims

1. Device with adjustable torque for an actuation via a spindle (11), wherein the spindle (11) is moved by the drive via a spindle nut (12) in two directions and the device decouples after reaching the adjusted torque, comprising:
- a securing means (7) on a hub output (2) on which an adjustable nut (6) is arranged which acts against a spring (5) on a retainer (4),
- at least three balls (3) in the retainer (4) between a hub drive (1) and the hub output (2), wherein the device is **characterised by**:
- at least three grooves (14) and stops (18) arranged on the hub drive (1) at intervals and
- at least three depressions (15) arranged on the hub output (2) at intervals for the at least three balls (3) and stops (19, 21) on each side of the depressions (15) for the stops (18) on the hub drive (1).

2. Device according to Claim 1, **characterised in that** a handwheel (10) is arranged on the hub drive (1).

3. Device according to any one of Claims 1 and 2, **characterised in that** the spring (5) constitutes a cupped spring.

4. Device according to any one of Claims 1 to 3, **characterised in that** the height of the depression (15) for the ball (3) on the hub output (2) is shorter than the radius of the ball (3) and the ends of the depression (15) have a radius which corresponds to the ball radius.

5. Device according to any one of Claims 1 to 4, **characterised in that** the securing means (7) constitutes a securing ring.

6. Device according to any one of Claims 1 to 5, **characterised in that** an indicator (9) is arranged on the hub drive (1).

7. Device according to any one of Claims 1 to 6, **characterised in that** the actuation means constitutes a valve disk (13), a brake or a pressure plate.

## Revendications

1. Dispositif avec un couple réglable pour une commande par l'intermédiaire d'une broche (11), la broche (11) étant déplacée dans deux directions par l'entraînement via un écrou de broche (12) et le dispositif découplant, une fois le couple réglé atteint, le dispositif présentant :
- un moyen de blocage (7) sur une sortie de moyeu (2), sur lequel est disposé un écrou réglable (6) qui agit à l'encontre d'un ressort (5) sur une cage (4),
- au moins trois billes (3) dans la cage (4) entre un entraînement de moyeu (1) et la sortie de moyeu (2), le dispositif étant **caractérisé par** :
- au moins trois rainures (14) et butées (18) disposées à des intervalles sur l'entraînement de moyeu (1) et
- au moins trois creux (15) disposés à des intervalles sur la sortie de moyeu (2) pour les au moins trois billes (3) et des butées (19, 21) de chaque côté des creux (15) pour les butées (18) sur l'entraînement de moyeu (1).

2. Dispositif suivant la revendication 1, **caractérisé en ce qu'**une manivelle (10) est disposée sur l'entraînement de moyeu (1).

3. Dispositif suivant une des revendications 1 et 2, **caractérisé en ce que** le ressort (5) est une rondelle-ressort.

4. Dispositif suivant une des revendications 1 à 3, **caractérisé en ce que** la hauteur du creux (15) pour la bille (3) sur la sortie de moyeu (2) est inférieure au rayon de la bille (3) et **en ce que** les extrémités du creux (15) présentent un rayon qui correspond au rayon de bille.

5. Dispositif suivant une des revendications 1 à 4, **caractérisé en ce que** le moyen de blocage (7) est une bague de retenue.

6. Dispositif suivant une des revendications 1 à 5, **caractérisé en ce qu'**un indicateur (9) est disposé sur l'entraînement de moyeu (1).

7. Dispositif suivant une des revendications 1 à 6, **caractérisé en ce que** la commande est une tête de soupape (13), un frein ou une plaque de pression.
